Europäisches Patentamt

European Patent Office

Office européen des brevets

(11) Veröffentlichungsnummer : **0 386 767 B1**

(12) **EUROPÄISCHE PATENTSCHRIFT**

(45) Veröffentlichungstag der Patentschrift :
02.11.94 Patentblatt 94/44

(21) Anmeldenummer : **90104456.0**

(22) Anmeldetag : **08.03.90**

(51) Int. Cl.⁵ : **H02P 3/04**

(54) **Antriebsanordnung, insbesondere für ein Hubwerk.**

(30) Priorität : **10.03.89 DE 3907853**

(43) Veröffentlichungstag der Anmeldung :
**12.09.90 Patentblatt 90/37**

(45) Bekanntmachung des Hinweises auf die
Patenterteilung :
**02.11.94 Patentblatt 94/44**

(84) Benannte Vertragsstaaten :
**AT BE DE FR GB**

(56) Entgegenhaltungen :
**DE-A- 1 463 260**
**DE-A- 1 814 275**
**DE-A- 2 237 639**
**DE-A- 3 631 298**
**US-A- 3 344 327**
**US-A- 4 145 645**

(73) Patentinhaber : **MAN GHH LOGISTICS GMBH**
**Hans-Riesser-Strasse 7**
**D-74076 Heilbronn (DE)**

(72) Erfinder : **Gschlössl, Georg, Dipl.-Ing. (FH)**
**Hohenlindnerstrasse 36**
**D-8016 Feldkirchen (DE)**

(74) Vertreter : **Liska, Horst, Dr.-Ing. et al**
**Patentanwälte**
**H. Weickmann,K. Fincke,F.A. Weickmann,**
**B. Huber,H. Liska,J. Prechtel,B. Böhm**
**Postfach 86 08 20**
**D-81635 München (DE)**

## Beschreibung

Die Erfindung betrifft eine Antriebsanordnung, insbesondere für ein Hubwerk gemäß dem Oberbegriff des Anspruchs 1.

Die Antriebsanordnung für das Hubwerk oder das Fahrwerk eines Krans oder dergleichen umfaßt üblicherweise einen Dreiphasen-Drehstrommotor, der mit einer Reibungsbremse zu einer Baueinheit vereinigt ist. Die Reibungsbremse wird so gesteuert, daß sie bei abgeschaltetem Drehstrommotor federbelastet eingreift und die Motorwelle bremst, während sie bei eingeschaltetem Drehstrommotor gelüftet wird und dessen Welle freigibt. Unbeabsichtigtes Abstürzen der Last eines Hubwerks oder unbeabsichtigtes Verfahren des Fahrwerks z. B. bei Stromausfall wird damit verhindert.

Bei einer bekannten Antriebsanordnung ist der Drehstrommotor als Verschiebeankermotor ausgebildet, dessen Anker zusammen mit der Motorwelle axial verschiebbar in dem Motorgehäuse gelagert ist. Die Motorwelle trägt einen Bremskonus und wird von einer Feder in eine gehäusefeste, ebenfalls konusförmige Bremstrommel axial hinein vorgespannt. Der Anker des Motors hat ebenfalls Konusform und wird von der Feder aus der gleichfalls konusförmigen Statoröffnung herausgedrückt. Das bei eingeschaltetem Motor erzeugte Statorfeld zieht den Anker in die Statoröffnung hinein, wodurch gleichzeitig der Bremskonus gelüftet wird. Die bekannte Antriebsanordnung hat den Vorteil, daß keine zusätzliche Steuerung für den Betrieb der Reibungsbremse erforderlich ist. Allerdings wird dieser Vorteil durch einen vergleichsweise hohen Bauaufwand des Verschiebeankermotors erkauft. Darüberhinaus bedingt die Konusform der Statoröffnung einen vergleichsweise großen Statordurchmesser, wenn Sättigungserscheinungen des Statoreisens vermieden werden sollen. Verglichen mit Drehstrommotoren mit zylinderförmigem Anker haben Verschiebeankermotoren deshalb vergleichsweise große Abmessungen, was für eine Vielzahl Anwendungsfälle unerwünscht ist.

Es ist ferner bekannt, als Hubwerkantrieb einen Dreiphasen-Drehstrommotor mit axial festem zylindrischen Läufer zu verwenden und die mit dem Drehstrommotor zu einer Einheit vereinigte Reibungsbremse mit einem gesonderten Elektromagnet zu versehen, der zusammen mit dem Motor erregt wird und so die bei abgeschaltetem Motor eingerückte Bremse lüftet. Der Elektromagnet der Bremse wird über eine Gleichrichterschaltung erregt, die in dem die Anschlußklemmen der Strangwicklungen des Drehstrommotors enthaltenden Motoranschlußkasten untergebracht ist.

Der Drehstrommotor hat, um zwei unterschiedliche Arbeitsgeschwindigkeiten des Hubwerks zu ermöglichen, zwei Dreiphasen-Feldwicklungen, die über Verbindungsleitungen mit einem gesonderten, entfernt gelegenen Schaltkasten verbunden sind. Der Schaltkasten enthält zur Drehrichtungsänderung des Drehstrommotors wenigstens ein die Phasen jeweils paarweise vertauschendes Drehrichtungs-Steuerschütz sowie zur Drehgeschwindigkeitsänderung wenigstens ein die beiden für unterschiedliche Polzahlen bemessenen Feldwicklungen wechselweise einschaltendes Geschwindigkeits-Steuerschütz. Bei der bekannten Antriebsanordnung ist zusätzlich zu dem Drehrichtungs-Steuerschütz und dem Geschwindigkeits-Steuerschütz ein Bremssteuerschütz in dem Steuerkasten vorgesehen, der über mehrere Verbindungsleitungen einerseits die Wechselstromseite der im Bereich des Drehstrommotors angeordneten Gleichrichterschaltung mit dem Drehstromnetz verbindet und andererseits mit einem seiner Schaltkontakte gleichstromseitig in Serie zu dem Elektromagnet der Reibungsbremse angeschlossen ist. Für die Steuerung der Bremse erfordert die bekannte Antriebsanordnung damit mehrere zusätzliche Verbindungsleitungen zwischen dem Schaltkasten und der in dem Motoranschlußkasten angeordneten Gleichrichterschaltung. Da insbesondere bei Hubwerkanwendungen das Hubwerk zum Beispiel auf einer Laufkatze über relativ große Entfernungen von mehreren 10 m relativ zum Schaltkasten fahrbar ist, erhöhen die zusätzlich zur Steuerung der Bremse erforderlichen Verbindungsleitungen zwischen Schaltkasten und Motoranschlußkasten den Herstellungsaufwand beträchtlich.

Aus der DE-A-22 37 639 ist ein Drehstrommotor mit einer einzigen Dreiphasen-Feldwicklung bekannt, bei dem eine durch den Motorstrom gesteuerte Erregerspule eines Relais in Serie mit einer der Phasenwicklungen der Dreiphasen-Feldwicklung geschaltet ist. Ein durch die Erregerwicklung gesteuerter Schließer liegt in Reihe mit einem durch Gleichstrom erregbaren Elektromagnet einer Scheibenbremse, wobei der Gleichstrom aus einem Gleichrichter bezogen wird, der wechselstromseitig mit der Dreiphasen-Feldwicklung in Verbindung steht. Beim Einschalten des Motors wird die Erregerspule durch den Motorstrom erregt und der Gleichstromkreis der Bremse durch den Schließer geschlossen, so daß die Bremse elektromagnetisch gelüftet wird. Beim Abschalten des Motors wird der Schließer geöffnet, wodurch die Bremse wieder in ihre Bremsstellung übergeht.

Es ist Aufgabe der Erfindung, eine insbesondere für ein Hubwerk geeignete Antriebsanordnung anzugeben, bei welcher eine mit einem polumschaltbaren Dreiphasen-Drehstrommotor zu einer Einheit verbundene, durch einen gesonderten Elektromagnet lüftbare Reibungsbremse ausschließlich über die ohnehin für den drehrichtungsumkehrbaren und polumschaltbaren Betrieb des Drehstrommotors erforderlichen Stromversorgungsleitungen gesteuert werden kann.

Ausgehend von der im Oberbegriff des Anspruchs 1 angegebenen Antriebsanordnung wird diese Aufgabe erfindungsgemäß durch die im Kennzeichen des Anspruchs 1 angegebenen Merkmale gelöst.

Die Erfindung geht davon aus, daß zwischen einander entsprechenden Verbindungspunkten von Feldwicklungen der beiden jeweils unterschiedlichen Polzahlen zugeordneten, jeweils in Stern- oder Dreieckschaltung geschalteten Dreiphasen-Feldwicklungen des Motors stets eine Differenzspannung auftritt, wenn über das Drehrichtungs-Steuerschütz und das Geschwindigkeits-Steuerschütz des Schaltkastens eine der beiden Dreiphasen-Feldwicklungen eingeschaltet wird. Da das Drehrichtungs-Steuerschütz für die Drehrichtungsumkehr lediglich zwei der drei Phasen vertauscht, sind bei eingeschaltetem Motor nicht nur die Strangwicklungen der über das Drehrichtungs-Steuerschütz eingeschalteten Dreiphasen-Feldwicklung, sondern auch eine der Strangwicklungen der anderen Dreiphasen-Feldwicklung mit dem Drehstromnetz verbunden. Damit wird in Sternschaltung der Sternpunkt der über das Drehrichtungs-Steuerschütz für den Motorbetrieb eingeschalteten Dreiphasen-Feldwicklung auf Nullpotential und der andere Sternpunkt auf dem Potential der Netzphase gehalten. Die zwischen den Sternpunkten auftretende Differenzspannung wird zur Steuerung der Bremse ausgenutzt. Die beiden Sternpunkte der Dreiphasen-Feldwicklungen sind hierzu, anders als bei Drehstrommotoren dieses Typs normalerweise üblich, bis in den Motorkasten herausgeführt, und die Gleichrichterschaltung sowie der im Rahmen der Erfindung motorseitig angeordnete Steuerschalter ist mit seinen Steueranschlüssen an die beiden den Sternpunkten zugeordneten Anschlußklemmen angeschlossen. Der steuerbare Schalter ist abhängig von der Differenzspannung zwischen den beiden Sternpunkten steuerbar und ist mit seiner Schaltstrecke so in den Gleichstromkreis des Elektromagnets der Bremse geschaltet, daß der Elektromagnet bei eingeschaltetem Drehstrommotor erregt, bei abgeschaltetem Drehstrommotor jedoch zur Beschleunigung des Ansprechens der Bremse den Elektromagnet von der Gleichrichterschaltung trennt. Die Schaltstrecke des steuerbaren Schalters kann hierzu als Schließer ausgebildet und in Serie zum Elektromagnet geschaltet sein, oder aber sie kann als Öffner ausgebildet und dem Elektromagnet parallel geschaltet sein. Bei dem steuerbaren Schalter kann es sich um ein Relais, aber auch um einen elektronischen Schalter handeln, wobei der steuerbare Schalter zweckmäßigerweise zusammen mit der Gleichrichterschaltung in dem Motorkasten untergebracht ist. Entsprechende verhältnisse ergeben sich bei einer Dreiphasen-Feldwicklung in Dreieckschaltung, für die dieselbe Schützanordnung zur Steuerung der Drehrichtung und der Geschwindigkeit in dem Schaltkasten herangezogen werden kann. Der Wechselstromeingang der Gleichrichterschaltung und der Steuereingang des steuerbaren Schalters sind hierbei zwischen zwei, vorzugsweise sich entsprechende Anschlußklemmen des Motorkastens angeschlossen, deren Netzphasen von dem Schaltkasten über die Schützanordnung phasenvertauscht werden kann. Auch bei der Dreieckschaltung sorgt die Schützanordnung dafür, daß bei Erregung einer der beiden Dreiphasen-Feldwicklungen die jeweils nicht phasenvertauschbare dritte Anschlußklemme der anderen Dreiphasen-Feldwicklung ebenfalls mit dem Drehstromnetz verbunden ist, um eine Potentialdifferenz zwischen den beiden Feldwicklungen zur Steuerung der Gleichrichterschaltung und des steuerbaren Schalters erzeugen zu können.

Im folgenden wird die Erfindung anhand einer Zeichnung näher erläutert. Hierbei zeigt:

Fig. 1     ein Schaltbild einer insbesondere für ein Hubwerk geeigneten Antriebsanordnung mit einem Drehstrommotor in Sternschaltung und

Fig. 2     eine Schaltungsvariante für einen in der Schaltung nach Fig. 1 verwendbaren Drehstrommotor mit Dreieckschaltung.

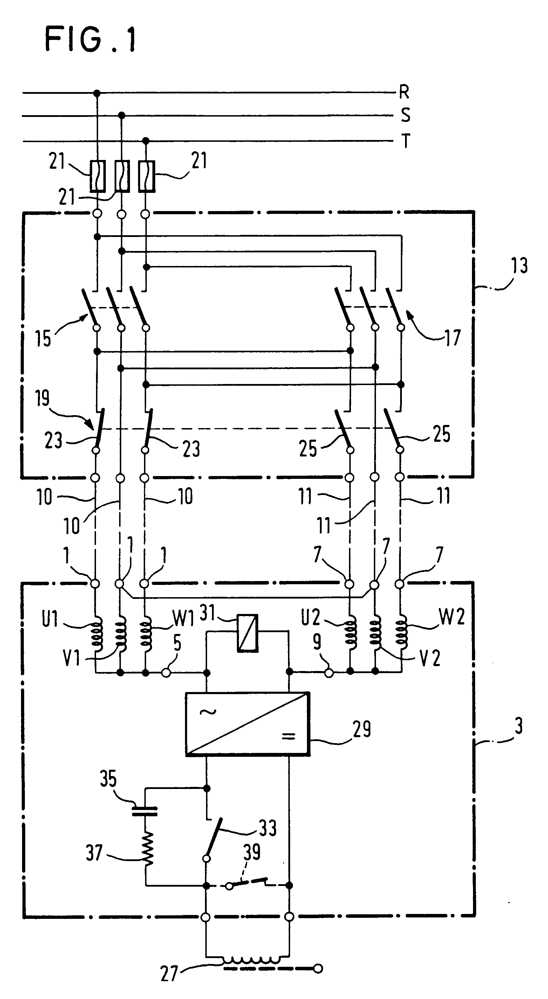

Die in Fig. 1 dargestellte Antriebsanordnung umfaßt einen nicht näher dargestellten, polumschaltbaren Dreiphasen-Drehstrommotor mit zylindrischem Läufer, der mit einer mechanischen, auf die Motorwelle wirkenden Reibungsbremse zu einer Baueinheit verbunden ist. Der Ständer des Motors hat zwei für unterschiedliche Polzahlen ausgelegte Dreiphasen-Feldwicklungen, deren für die höhere Polzahl und damit niedrigere Geschwindigkeit ausgelegte Strangwicklungen mit U1, V1 und W1 bezeichnet sind, während die mit U2, V2 und W2 bezeichneten Strangwicklungen der niedrigeren Polzahl und damit höheren Geschwindigkeit zugeordnet sind. Die Strangwicklungen U1, V1 und W1 sind mit ihrem einen Ende an Anschlußklemmen 1 eines mit dem Drehstrommotor zu einer Einheit verbundenen Motoranschlußkastens 3 zugänglich und mit ihren anderen Enden zu einem gemeinsamen Sternpunkt verbunden, der ebenfalls an einer Anschlußklemme 5 des Motoranschlußkastens 3 zugänglich ist. Entsprechendes gilt für die Strangwicklungen U2, V2 und W2, die mit ihren einen Enden an Anschlußklemmen 7 des Motoranschlußkastens und mit ihren zu einem Sternpunkt verbundenen anderen Enden an einer gemeinsamen Anschlußklemme 9 des Motoranschlußkastens 3 zugänglich sind. Die Strangwicklungen sind über Verbindungsleitungen 10, 11 mit einem von dem Drehstrommotor entfernt angeordneten Steuerkasten 13 verbunden, der ein Vorwärts-Steuerschütz 15, ein Rückwärts-Steuerschütz 17 und ein Geschwindigkeits-Steuerschütz 19 enthält. Der Steuerkasten 13 ist über Sicherungen 21 mit einem Drehstromnetz R, S, T verbunden. Das Vorwärts-Steuerschütz 15 und das Rückwärts-Steuerschütz 17 sind dem Geschwindigkeits-Steuerschütz 19 vorgeschaltet und schalten jeweils alle drei Phasen, um im Ruhezustand die Verbindungsleitungen 10, 11 zum Motoranschlußkasten 3 stromlos halten zu können. Die Schaltkontakte der Steuerschütze, 15, 17 sind ausgangsseitig bezogen auf einander entsprechende Stränge U1, U2 bzw. V1, V2 und W1, W2 einander parallel geschaltet, während die Schaltkontakte eingangsseitig unter Phasenvertauschung der Stränge U1, W2 und W1, U2 phasenweise miteinander verbunden sind. Bezüglich der Stränge V1 und V2 bilden die Steuerschütze 15, 17 lediglich Ein- und Ausschalter, über die die Stränge V1, V2 vom Netz getrennt werden können. Die Stränge V1, V2 sind im übrigen direkt, d.h. ohne über einen weiteren Schützkontakt mit den Steuerschützen 15, 17 verbunden.

Das Geschwindigkeitssteuerschütz 19 hat in Serie zu den phasentauschbaren Strängen U1, W1 bzw. U2, W2 liegende Schaltkontakte, von denen die Schaltkontakte der Stränge U1, W1 für die langsamere Geschwindigkeit als normalerweise geschlossene Öffner 23 und die Schaltkontakte der Stränge U2, W2 als normalerweise offene Schließer 25 ausgebildet sind. Durch Schließen der Schaltkontakte des Vorwärts-Steuerschützes 15 oder des Rückwärts-Steuerschützes 17 wird der Drehstrommotor mit langsamer Geschwindigkeit in der gewählten Drehrichtung eingeschaltet. Wird zusätzlich das Geschwindigkeits-Steuerschütz 19 betätigt, so wird in der gewählten Drehrichtung von der langsamen Geschwindigkeit auf die schnelle Geschwindigkeit umgeschaltet.

Die auf die Motorwelle wirkende Reibungsbremse wird von einer nicht näher dargestellten Feder oder dergleichen in ihre die Motorwelle bremsende Stellung vorgespannt. Durch Erregen eines Elektromagnets 27 wird während des Motorbetriebs die Bremse gelüftet. Der Elektromagnet 27 ist über eine Gleichrichterschaltung 29 an die den beiden Sternpunkten zugeordneten Anschlußklemmen 5, 9 des Motoranschlußkastens 3 angeschlossen. Die beiden Anschlußklemmen 5, 9 sind strom- und spannungsfrei, solange keines der Steuerschütze 15, 17 eingeschaltet ist. Der Elektromagnet 27 ist damit stromlos, und die Bremse ist eingerückt. Wird eines der Steuerschütze 15 oder 17 betätigt, so liegt am Sternpunkt der eingeschalteten Stränge aufgrund der Symmetriebedingungen der Strangspannungen Null-Potential, während der lediglich über den Strang V mit dem Drehstromnetz verbundene andere Sternpunkt auf einem Potential gleich der Strangspannung dividiert durch $\sqrt{3}$ sich befindet. Bei einem Drehstromnetz mit 380 V Strangspannungen liegt damit bei eingeschaltetem Drehstrommotor zwischen den beiden Sternpunkten eine Differenzspannung von 220 V, die über die Gleichrichterschaltung 29 zur Erregung des Elektromagnets 27 ausgenutzt wird.

Um möglichst rasches Ansprechen der Reibungsbremse nach dem Abschalten des Elektromotors zu erreichen, ist parallel zur Wechselstromseite der Gleichrichterschaltung 29 ein Relais 31 mit seiner Erregerwicklung an die beiden, den Sternpunkten zugeordneten Anschlußklemmen 5, 9 angeschlossen. Das Relais 31 hat einen als Schließer ausgebildeten Kontakt 33, der in Serie zum Elektromagnet 27 an die Gleichstromseite der Gleichrichterschaltung 29 angeschlossen ist. Bei eingeschaltetem Drehstrommotor wird die Erregerwicklung des Relais 31 erregt und der Kontakt 33 zur Erregung des Elektromagnets 27 geschlossen. Beim Abschalten des Drehstrommotors öffnet der Kontakt 33 und sorgt so für einen raschen Abbau des Magnetfelds des Elektromagnets 27. Dem Kontakt 33 ist zur Dämpfung eines entstehenden Öffnungsfunkens ein aus einem Kondensator 35 und einem Widerstand 37 bestehendes Serien-RC-Glied parallel geschaltet. Das Relais 31 kann statt des in Serie geschalteten Schließer-Kontakts 33 einen normalerweise geschlossenen Öffner-Kontakt 39 haben. Der Kontakt 39 ist dem Elektromagnet 27 parallel geschaltet und öffnet bei eingeschaltetem Drehstrommotor. Beim Abschalten des Drehstrommotors schließt der Kontakt 39 und bildet einen Kurzschluß zum Elektromagnet 27, wodurch ebenfalls das Magnetfeld rasch abgebaut wird.

Das Relais 31 und die Gleichrichterschaltung 29 sowie das RC-Glied sind zweckmäßigerweise ebenfalls in dem Motoranschlußkasten 3 untergebracht. Anstelle des Relais 31 kann auch ein elektronischer Schalter, beispielsweise ein Thyristorschalter oder dergleichen, vorgesehen sein.

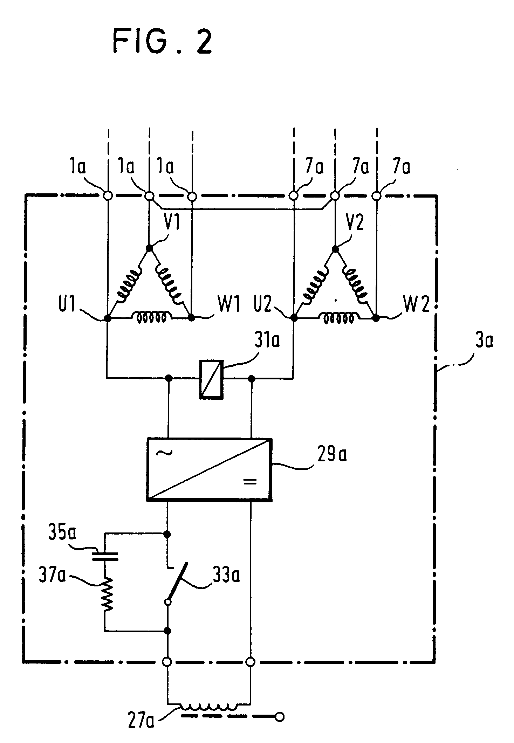

Fig. 2 zeigt eine Variante der Antriebsanordnung für einen polumschaltbaren Dreiphasen-Drehstrommotor mit zylindrischem Läufer und mechanisch auf die Motorwelle wirkender Reibungsbremse, dessen Dreiphasen-Feldwicklungen jedoch in Dreieckschaltung geschaltet sind. Fig. 2 zeigt lediglich die motorseitige Schaltung, da die schaltkastenseitige Schaltung der Steuerschütze der Schaltung nach Fig. 1 entspricht. In Fig. 2 gleichwirkende Komponenten sind mit den Bezugszahlen der Fig. 1 und zur Unterscheidung mit dem Buchstaben a versehen.

Zur Erläuterung der Funktion und Wirkungsweise wird auf die Beschreibung der Fig. 1 Bezug genommen. Die Strangwicklungen der Dreiphasen-Feldwicklungen sind wiederum mit U1, V1 und W1 für die höhere Polzahl und damit niedrigere Geschwindigkeit ausgelegte Feldwicklung bezeichnet, während die Strangwicklungen der Feldwicklung mit niedrigerer Polzahl mit U2, V2 und W2 bezeichnet sind. Die Bezeichnungen sind in Fig. 2, um den Vergleich mit Fig. 1 zu erleichtern, an die jeweils mit den Anschlußklemmen 1a bzw. 7a des Motorkastens 3a verbundenen Dreieckspunkte der Dreiphasen-Feldwicklungen gezeichnet. Entsprechend Fig. 1 handelt es sich bei den Dreieckspunkten U1 und W1 einerseits und U2 und W2 andererseits um die für die Drehrichtungsumkehr phasenvertauschbaren Dreieckspunkte, während die Dreieckspunkte V1 und V2 über das Drehrichtungs-Steuerschütz bei Erregung einer der beiden Dreiphasen-Feldwicklungen jeweils gemeinsam mit der zugehörigen Netzphase verbunden sind.

Der Elektromagnet 27a wird wiederum über eine Gleichrichterschaltung 29a erregt, deren Wechselstromseite an die Dreieckspunkte U1 und U2 angeschlossen ist. An die Dreieckspunkte U1 und U2 ist darüberhinaus wiederum ein steuerbarer Schalter, hier in Form eines Relais 31a, mit seinem Steuereingang angeschlossen. Der als Schließer ausgebildete Relaiskontakt 33a ist wiederum in Serie zum Elektromagnet 27a an die Gleichstromseite der Gleichrichterschaltung 29a angeschlossen. Dem Kontakt 33a ist die Serienschaltung aus einem Kondensator 35a und einem Widerstand 37a parallel geschaltet. Anstelle des Serienkontakts 33a kann analog zu Fig. 1 auch ein als Öffner ausgebildeter Nebenschlußkontakt vorgesehen sein. Die Gleichrichterschaltung 29a und das Relais 31 werden in entsprechender Weise abhängig von der Potentialdifferenz zwischen den Dreieckspunkten U1 und U2 gesteuert. Sind beide Fedelwicklungen abgeschaltet, so ist die Potentialdifferenz zwischen den Dreieckspunkten U1 und U2 Null. Wird eine der beiden Feldwicklungen, zum Beispiel die Feldwicklung U1, V1, W1, erregt, so entsteht zwischen den Dreieckspunkten U1 und U2 eine Differenzspannung, da der Dreieckspunkt V2 der nicht erregten Feldwicklung über das Drehrichtungs-Steuerschütz des vom Motorkasten 3a entfernt angeordneten Schaltkastens ebenfalls mit einer Phase des Dreiphasennetzes verbunden ist. Die Differenzspannung wird zur Erregung des Elektromagnets 27 ausgenutzt.

## Patentansprüche

1. Antriebsanordnung, insbesondere für ein Hubwerk, mit einem Dreiphasen-Drehstrommotor mit zwei für unterschiedliche Polzahlen bemessenen Dreiphasen-Feldwicklungen, deren Strangwicklungen (U1, V1, W1, U2, V2, W2) in Stern- oder Dreieckschaltung miteinander verbunden sind und an Anschlußklemmen (1, 7; 1a, 7a) für den Anschluß von drei Netzphasen in einem eine Einheit mit dem Drehstrommotor bildenden Motorkasten (3; 3a) angeschlossen sind,
mit einem von dem Drehstrommotor gesonderten Schaltkasten (13), welcher zur Drehrichtungsänderung des Drehstrommotors wenigstens ein die Netzphasen an zwei der Anschlußklemmen der Dreiphasen-Feldwicklungen paarweise vertauschendes Drehrichtungs-Steuerschütz (15, 17) sowie zur Drehgeschwindigkeitsänderung des Drehstrommotors wenigstens ein die Dreiphasen-Feldwicklungen wechselweise einschaltendes Geschwindigkeits-Steuerschütz (19) enthält und der über voneinander gesonderte Leitungen (10,11) mit den Anschlußklemmen (1, 7; 1a, 7a) der Strangwicklungen (U1, V1, W1, U2, V2, W2) in dem Motorkasten (3; 3a) verbunden ist und bei Erregung einer der beiden Dreiphasen-Feldwicklungen die dritten Anschlußklemmen beider Dreiphasen-Feldwicklungen gemeinsam mit der zugeordneten Netzphase verbindet,
mit einer mit dem Drehstrommotor zu einer Einheit verbundenen, dessen Motorwelle im Ruhezustand bremsenden Reibungsbremse, die von einem Elektromagnet (27; 27a) während des Motorbetriebs lüftbar ist, und mit einer mit dem Drehstrommotor zu einer Einheit verbundenen Gleichrichterschaltung (29; 29a), die wechselstromseitig von dem Schaltkasten (13) aus schaltbar ist und gleichstromseitig mit dem Elektromagnet (27; 27a) verbunden ist, wobei die Gleichstromverbindung des Elektromagnets (27; 27a) zusätzlich über einen steuerbaren Schalter (31, 33, 39; 31a, 33a) schaltbar ist,
**dadurch gekennzeichnet, daß**
bei in Sternschaltung geschalteten Dreiphasen-Feldwicklungen auch den Sternpunkten der beiden Dreiphasen-Feldwicklungen Anschlußklemmen (5, 9) in dem Motorkasten (3) zugeordnet sind und die Gleichrichterschaltung und der steuerbare Schalter (31, 33, 39) mit seinem Steuereingang an die Sternpunkt-Anschlußklemmen (5, 9) angeschlossen und abhängig von der Differenzspannung zwischen den beiden Sternpunkten steuerbar ist oder daß bei in Dreieckschaltung geschalteten Dreiphasen-Feldwicklungen die Gleichrichterschaltung (29a) und der steuerbare Schalter (31a, 33a) mit seinem Steuereingang zwischen phasenvertauschbare Anschlußklemmen der beiden Dreiphasen-Feldwicklungen angeschlossen sind und abhängig von der Differenzspannung zwischen diesen beiden Anschlußklemmen steuerbar ist.

2. Antriebsanordnung nach Anspruch 1, dadurch gekennzeichnet, daß der steuerbare Schalter (31, 33, 39; 31a, 32a) zusammen mit der Gleichrichterschaltung in dem Motorkasten (3) untergebracht ist.

3. Antriebsanordnung nach Anspruch 1 oder 2, dadurch gekennzeichnet, daß der steuerbare Schalter als Relais (31; 31a) ausgebildet ist.

4. Antriebsanordnung nach Anspruch 1 oder 2, dadurch gekennzeichnet, daß der steuerbare Schalter als elektronischer Schalter ausgebildet ist.

5. Antriebsanordnung nach einem der Ansprüche 1 bis 4, dadurch gekennzeichnet, daß die Schaltstrecke (33) des steuerbaren Schalters (31, 33) in Serie zum Elektromagnet (27) geschaltet ist und bei einer von Null abweichenden Differenzspannung geschlossen ist.

6. Antriebsanordnung nach einem der Ansprüche 1 bis 4, dadurch gekennzeichnet, daß die Schaltstrecke (39) des steuerbaren Schalters (31) parallel zum Elektromagnet (27) geschaltet ist und bei einer von Null abweichende Differenzspannung offen ist.

## Claims

1. Driving arrangement, in particular for a lifting device, comprising a three-phase motor having two three-phase field windings dimensioned for different pole numbers, the three-phase field windings having phase windings (U1, V1, W1, U2, V2, W2) connected with one another in star or delta connection and to connection terminals (1, 7; la, 7a) for the connection of three mains phases in a motor terminal box (3; 3a) forming one unit with the three-phase motor,
a switch box (13) separate from the three-phase motor, which switch box contains, for the variation of direction of rotation of the three-phase motor, at least one rotation direction control contactor (15, 17) exchanging the mains phases on two of the connection terminals of the three-phase field windings by pairs and, for the variation of speed of rotation of the three-phase motor, at least one speed control contactor (19) alternately switching on the three-phase field windings, said switch box (13) being connected through mutually separate leads (10, 11) with the connection terminals (1, 7; 1a, 7a) of the phase windings (U1, V1, W1, U2, V2, W2) in the motor terminal box (3; 3a) and, on energization of one of the two three-phase field windings, connecting a third one of the connection terminals of the two three-phase field windings in common with the associated mains phase, a friction brake combined into one unit with the three-phase motor and braking the motor shaft of the three-phase motor in the rest condition, which friction brake can be released by an electro-magnet (27; 27a) during motor operation, and
a rectifier circuit (29; 29a) combined into one unit with the three-phase motor and controllable on the alternating current side by the switch box (13) and connected to the electro-magnet (27; 27a) on the direct current side, the direct current connection of the electro-magnet (27; 27a) being additionally controllable through a controllable switch (31, 33, 39; 31a, 33a),
**characterized in that,**
in the case of three-phase field windings connected in star connection, connection terminals (5, 9) in the motor terminal box (3) are also allocated to the star points of the two three-phase field windings and the rectifier circuit and the controllable switch (31, 33, 39) with its control input are connected to the star point connection terminals (5, 9) and the controllable switch is controllable in dependence upon the differential voltage between the two star points or in that, in the case of three-phase field windings connected in delta connection, the rectifier circuit (29a) and the controllable switch (31a, 33a) with its control input are connected between phase-exchangeable connection terminals of the two three-phase field windings and the controllable switch is controllable in dependence upon the differential voltage between these two connection terminals.

2. A driving arrangement according to Claim 1, characterized in that the controllable switch (31, 33, 39; 31a, 32a) is accommodated together with the rectifier circuit in the motor terminal box (3).

3. A driving arrangement according to Claim 1 or 2, characterized in that the controllable switch is formed as a relay (31; 31a).

4. A driving arrangement according to Claim 1 or 2, characterized in that the controllable switch is formed as an electronic switch.

5. A driving arrangement according to any one of Claims 1 to 4, characterized in that the switch path (33) of the controllable switch (31, 33) is connected in series with the electro-magnet (27) and is closed in the case of a differential voltage deviating from zero.

6. A driving arrangement according to any one of Claims 1 to 4, characterized in that the switch path (39) of the controllable switch (31) is connected in parallel with the electro-magnet (27) and is open in the case of a differential voltage deviating from zero.

**Revendications**

1. Dispositif d'entraînement, en particulier pour un mécanisme de levage, comportant un moteur triphasé avec deux enroulements de champ triphasés calculés pour différents nombres de pôles, dont les enroulements (U1, V1, W1, U2, V2, W2) sont reliés entre eux en montage étoile ou en montage triangle et sont raccordés à des bornes (1, 7 ; 1a, 7a) pour le raccordement de trois phases de réseau, dans un carter de moteur (3 ; 3a) formant une unité avec le moteur triphasé,
comportant un coffret de commande (13), séparé du moteur triphasé, qui contient pour la variation du sens de rotation du moteur triphasé au moins un contacteur de commande de sens de rotation (15, 17) permutant deux par deux les phases du réseau par rapport à deux des bornes de raccordement des enroulements triphasés, ainsi que pour la variation de la vitesse de rotation du moteur triphasé, au moins un contacteur de commande de vitesse (19) enclenchant alternativement les enroulements de champ triphasés et qui, par des lignes (10, 11) séparées l'une de l'autre, est relié aux bornes (1, 7 ; la, 7a) des enroulements (U1, V1, W1, U2, V2, W2) dans le carter de moteur (3 ; 3a) et en cas d'excitation de l'un des deux enroulements de champ triphasés, relie les troisièmes bornes des deux enroulements de champ triphasés conjointement avec la phase de réseau correspondante,
comportant un frein à friction relié au moteur triphasé pour former une unité, dont l'arbre moteur est freiné à l'état de repos, lequel frein peut être relâché par un électro-aimant (27 ; 27a) pendant le fonctionnement du moteur, et comportant un circuit redresseur (29 ; 29a) relié au moteur triphasé pour former une unité, qui peut être commandé côté courant alternatif à partir du coffret de commande (13) et est relié, côté courant continu, avec l'électro-aimant (27 ; 27a), la liaison au courant continu de l'électro-aimant (27 ; 27a) pouvant être commandée en plus par un premier interrupteur commandé (31, 33, 39 ; 31a, 33a),
caractérisé en ce que dans le cas où les enroulements de champ triphasés sont montés en étoile, aux points étoiles des deux enroulements de champ triphasés sont aussi associées des bornes de raccordement (5, 9) dans le carter de moteur (3) et le circuit redresseur ainsi que l'interrupteur commandé (31, 33, 39) avec son entrée de commande sont raccordés aux bornes de point étoile (5, 9) et peuvent être commandés en fonction de la tension différentielle entre les deux points étoiles, ou en ce que dans le cas où les enroulements de champ triphasés sont montés en triangle, le circuit redresseur (29a) et l'interrupteur commandé (31a, 33a) avec son entrée de commande sont raccordés entre des bornes aux phases permutables des deux enroulements de champ triphasés et peuvent être commandés en fonction de la tension différentielle entre ces deux bornes.

2. Dispositif d'entraînement selon la revendication 1, caractérisé en ce que l'interrupteur commandé (31, 33, 39 ; 31a, 32a) est logé avec le circuit redresseur dans le carter de moteur (3).

3. Dispositif d'entraînement selon la revendication 1 ou 2, caractérisé en ce que l'interrupteur commandé est réalisé sous la forme d'un relais (31 ; 31a).

4. Dispositif d'entraînement selon les revendications 1 ou 2, caractérisé en ce que l'interrupteur commandé est réalisé sous la forme d'un interrupteur électronique.

5. Dispositif d'entraînement selon l'une des revendications 1 à 4, caractérisé en ce que le circuit de coupure (33) de l'interrupteur commandé (31, 33) est monté en série avec l'électro-aimant (27) et est fermé dans le cas d'une tension différentielle différente de zéro.

6. Dispositif d'entraînement selon l'une des revendications 1 à 4, caractérisé en ce que le circuit de coupure (39) de l'interrupteur commandé (31) est monté en parallèle à l'électro-aimant (27) et est ouvert dans le cas d'une tension différentielle différente de zéro.

# FIG.1

# FIG . 2